Europäisches Patentamt

European Patent Office

Office européen des brevets

(11) Veröffentlichungsnummer: **0 224 087**
**A2**

(12) **EUROPÄISCHE PATENTANMELDUNG**

(21) Anmeldenummer: **86115379.9**

(22) Anmeldetag: **06.11.86**

(51) Int. Cl.⁴: **C04B 35/10** , C25D 11/04 ,
H04R 7/02 , H04R 31/00

(30) Priorität: **29.11.85 DE 3542202**

(43) Veröffentlichungstag der Anmeldung:
**03.06.87 Patentblatt 87/23**

(84) Benannte Vertragsstaaten:
**AT BE CH DE ES FR GB GR IT LI LU NL SE**

(71) Anmelder: **Thiel, Bernhard**
**Jahnstrasse 22**
**D-6653 Blieskastel 5(DE)**

(72) Erfinder: **Thiel, Bernhard**
**Jahnstrasse 22**
**D-6653 Blieskastel 5(DE)**

(74) Vertreter: **Durm, Klaus, Dr.-Ing.**
**Felix-Mottl-Strasse 1a**
**D-7500 Karlsruhe 21(DE)**

(54) **Verfahren zur Herstellung dünnwandiger Formteile aus Keramik und durch das Verfahren erhaltene Membran für Schallwandler.**

(57) Die Erfindung betrifft ein Verfahren zur Herstellung dünnwandiger Formteile aus Keramik. Hierzu wird das gewünschte Formteil aus Reinaluminium gebildet und so lange einer anodischen Oxidation unterworfen, bis aus dem Reinaluminium weitgehend Aluminium-Oxid geworden ist. Das aus Aluminium-Oxid bestehend Formteil wird sodann bei Temperaturen über 600 Grad Celsius so lange gebrannt, bis das Aluminium-Oxid sich in eine kristalline Modifikation umgewandelt hat. Mittels des Verfahrens lassen sich beispielsweise Membranen für Lautsprecher herstellen.

EP 0 224 087 A2

## Verfahren zur Herstellung dünnwandiger Formteile aus Keramik und durch das Verfahren erhaltene Membran für Schallwandler

Die Erfindung betrifft ein Verfahren zur Herstellung dünnwandiger Formteile aus Keramik und eine durch das Verfahren erhaltene, schwingfähige Membran für Schallwandler.

Die Herstellung von keramischen Formteilen mit geringen Wandstärken (unter 1/2 Millimeter) ist schwierig und setzt große Erfahrungen sowie zeitaufwendige Arbeitsmethoden voraus. Wandstärken von einem Zehntel Millimeter lassen sich für größere Formteile nur mit extremem Aufwand erzielen.

Der Erfindung liegt die Aufgabe zugrunde, die Herstel lung von sehr dünnwandigen Formteilen größerer Abmessungen auf einfache und preiswerte Weise zu ermöglichen.

Zur Lösung der gestellten Aufgabe schlägt die Erfindung vor, zunächst das Formteil aus Reinaluminium zu bilden, das aus Reinaluminium gebildete Formteil dann solange einer anodischen Oxidation zu unterwerfen, bis aus dem Reinaluminium Aluminium-Oxid geworden ist, und zuletzt das aus Aluminium-Oxid bestehende Formteil bei Temperaturen über 600 Grad Celsius so lange zu brennen, bis dieses Aluminium-Oxid sich in eine kristalline Modifikation umgewandelt hat.

Mit dem vorgeschlagenen Verfahren ist es ohne Schwierigkeiten möglich, neben dünnen Platten aus Keramik auch komplizierter gestaltete Formteile wie beispielsweise Trichter, Hohlzylinder, Schalen usw. von 20 Zentimeter Ausdehnung und mehr bei Wandstärken von nur 0,1 Millimeter herzustellen. Solche Formteile können wegen ihrer außerordentlichen Eigenschaften (Härte und Sprödigkeit, hohe chemische Beständigkeit, extrem geringe elektrische Leitfähigkeit) vielfache Anwendung finden, beispielsweise in der Elektroakustik für Lautsprechermembranen. Da das Ausgangsprodukt des Verfahrens aus dem sehr leicht bearbeitbarem Reinaluminium besteht, bietet die Formgebung der hergestellten keramischen Formteile kein Problem.

Das aus Reinaluminium gebildete Formteil wird vor der anodischen Oxidation zuerst entfettet und abgespült, sodann in Natronlauge gereinigt und angeätzt und daraufhin mit verdünnter Salpetersäure die anhaftenden Reste der Natronlauge neutralisiert. Diese Maßnahmen vermeiden Schwierigkeiten und Fehler bei der nachfolgenden anodischen Oxidation.

Als Lösung für die anodische Oxidation wird eine schwache Säure benutzt, wie z. B. Oxalsäure oder Ameisensäure.

Um kompakte Oxidschichten zu erhalten, wird zweckmäßig die Lösung während der anodischen Oxidation gekühlt.

Die anodische Oxidation des aus Reinaluminium gebildeten Formteiles geschieht zweckmäßig so lange, bis die Stromstärke auf etwa 10 Milliampère pro Quadratdezimeter der Oberfläche abgefallen ist. Dieser Wert stellt sich relativ rasch in dem Zeitpunkt ein, bei welchem das Formteil durchscheinend geworden ist.

Vorteilhaft ist das Formteil nahtlos aus Reinaluminium gebildet. Dabei kann Reinaluminium-Blech einer Stärke von 0,01 bis 0,3 Millimeter verwendet werden, welches durch Pressen bzw. durch Tiefziehen bearbeitet wird.

Das vorgeschlagene Verfahren eignet sich hervorragend zur Herstellung von Membranen für elektro-akustische Wandler. Es ist bekannt, Membranen für Lautsprecher aus Pappenguß, aus Kunststoff sowie aus Metall herzustellen. Membranen aus Pappenguß oder Kunststoff sind zwar kostengünstig herzustellen und haben eine große innere Dämpfung, neigen aber wegen ihrer geringen Festigkeit zu Partialschwingungen, deren Frequenzen mitten im Hörbereich liegen und daher sehr störend wahrgenommen werden. Die innere Dämpfung des Materials kann diese Partialschwingungen zwar mildern, führt aber zu anderen Fehlern wie z. B. Klirren oder schlechtem Impulsverhalten. Bei Membranen aus Metall (Aluminium, Titan, ganz selten Beryllium) liegen wegen der höheren Festigkeit die Partialschwingungen im Frequenzbereich höher. Sie befinden sich aber immer noch im Arbeitsbereich des jeweiligen Lautsprechers und sind sehr laut hörbar, da die innere Dämpfung nur gering ist.

Eine schwingfähige Membran für elektroakustische Wandler sollte möglichst wenig dehn- und stauchbar sein und darüber hinaus ein extrem geringes Gewicht aufweisen. Die bisher bekannten Lautsprechermembranen genügen diesen Forderungen nur teilweise. Hier bietet sich die Anwendung des beschriebenen Verfahrens an, welches es ermöglicht, Membranen für Schallwandler aus extrem dünner Keramik -nämlich aus Korund -herzustellen. Dieses Material besitzt nur eine ganz geringe Dehn-und Stauchbarkeit, was bedeutet, daß Membranen mit sehr hoher Steifigkeit hergestellt werden können, darüber hinaus gestattet das Verfahren, beliebig geformte, sehr dünne und damit außerordentlich leichte Membranen herzustellen, deren kleine Masse nur geringe Trägheitskräfte hervorruft. Da hierbei von einem der endgültigen Form der Membran genau entsprechenden Formkörper aus Reinaluminium-Blech ausgegangen werden kann, gibt es hinsichtlich der teilweise recht komplizierten Formgebungen der Membranen keine Schwierigkeiten.

Die Erfindung wird nachstehend anhand der beigefügten Zeichnung näher erläutert. In dieser Zeichnung zeigen in vereinfachter schematischer Darstellung:

Fig. 1 ein dünnwandiges Formteil in Gestalt einer Membran für Schallwandler in einem Querschnitt;

Fig. 2 die Herstellung des Formteiles gemäß Fig. 1 durch Tiefziehen aus Reinaluminium-Blech;

Fig. 3 das Entfetten und Abspülen des durch Tiefziehen gebildeten Formteiles;

Fig. 4 die Reinigung und das Anätzen des entfetteten Formteiles;

Fig. 5 die Neutralisierung des gereinigten Formteiles;

Fig. 6 die anodische Oxidation des Formteiles mit Gleichstrom;

Fig. 7 das Brennen des anodisch oxidierten Formteiles bei Temperaturen über 600 Grad Celsius.

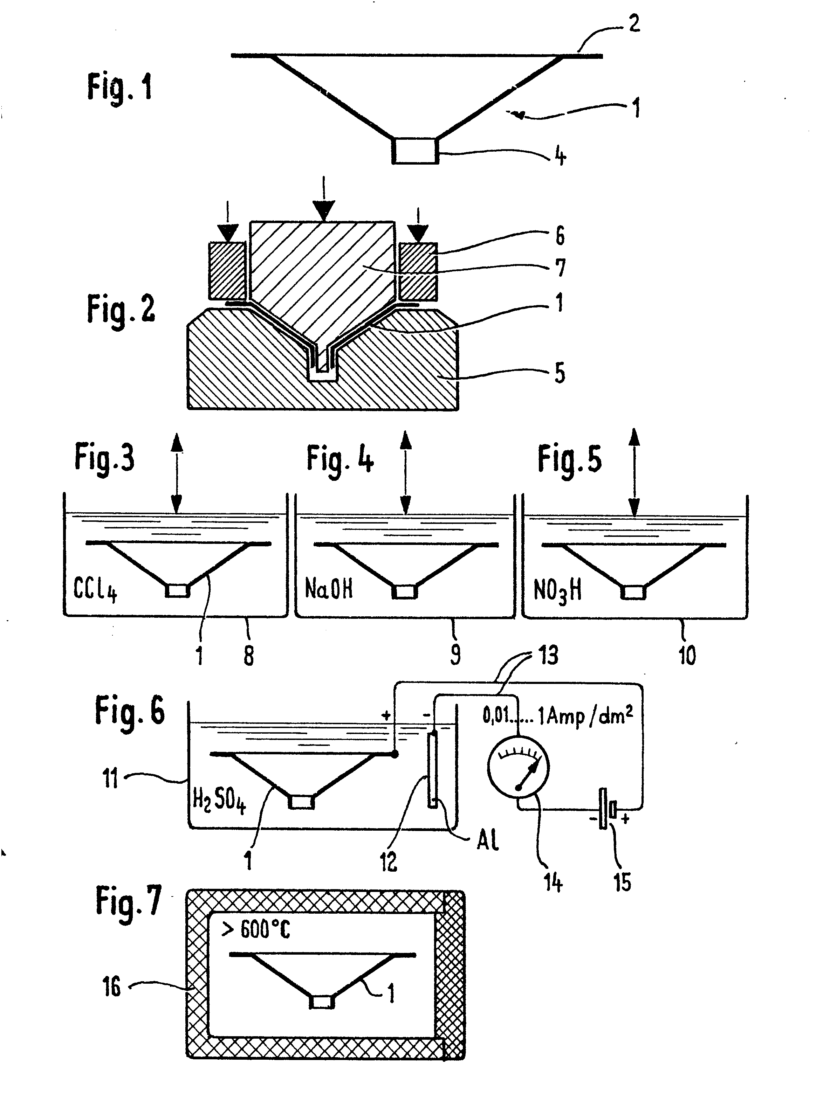

Bei dem in Figur 1 beispielhaft dargestellten, dünnwandigen Formteil 1 handelt es sich um eine Membran für einen elektro-akustischen Wandler, nämlich eine Lautsprechermembran. Das Formteil 1 ist nahtlos aus einem dünnen Reinaluminium-Blech (Reinheit 99,95 %) mit einer Dicke von 0,1 Millimeter gebildet und besteht aus einem kreisringförmigen Einspannrand 2, einem flachkegeligen Trichter 3 sowie einem zylindrischen Schwingspulenhalter 4. Der Einspannrand 2 kann Sicken aufweisen, die in der Zeichnung aber nicht dargestellt sind.

Das Formteil 1 wird -wie Figur 2 verdeutlicht - durch Tiefziehen hergestellt. Hierzu wird die leicht eingefettete Platine aus Reinaluminium-Blech auf die Form 5 gelegt und am späteren Einspannrand 2 durch den Niederhalter 6 festgehalten. Mit dem Stempel 7 findet die Verformung der Platine zu dem Formteil 1 statt.

Das solchermaßen durch Tiefziehen aus Reinaluminium gebildete Formteil 1 wird -vgl. Figur 3 -in einer Tetrachlorkohlenstoff (CCl₄) enthaltenden Wanne 8 durch mehrmaliges Eintauchen entfettet und abgespült.

Das entfettete Formteil 1 wird anschließend durch Einbringen in ein Gefäß 9 mit Natronlauge (NaOH) von anhaftenden Oxidschichten und Schmutz gereinigt und zugleich angeätzt -siehe Figur 4.

Die Reste der am Formteil 1 noch anhaftenden Natronlauge werden durch Einbringen in das mit verdünnter Salpetersäure (NO₃H) gefüllte Becken 10 neutralisiert.

Das wie beschrieben vorbereitete Formteil 1 wird jetzt einer anodischen Oxidation unterworfen - vgl. Figur 6. In einem Trog 11 befindet sich Oxalsäure oder Ameisensäure in welche das Formteil 1 gehängt wird. Im Trog 11 befindet sich eine als Kathode dienende Reinaluminium-Platte 12. Das die Anode bildende Formteil 1 sowie die Reinaluminium-Platte 12 sind mittels elektrischer Leitungen 13 über ein Ampèremeter 14 mit einer Gleichstromquelle 15 verbunden.

Die Elektrolyse (bei welcher sich Wasserstoff - (H) entwickelt) wird im Trog 11 bei einer Stromstärke von etwa 1 Ampère je Quadratdezimeter der Oberfläche des Formteiles 1 solange durchgeführt, bis letzteres durchscheinend geworden ist -dies ist leicht zu beobachten -und die am Ampèremeter 14 angezeigte Stromstärke auf den hundertsten Teil , auf etwa 10 Milliampère pro Quadratdezimeter, gefallen ist. Aus dem ursprünglichen Reinaluminium (Al) des Formteiles 1 ist dann Aluminium-Oxid (Al₂O₃) in überwiegend amorpher Modifikation (mit eingelagertem Kristallwasser und Verunreinigungen durch die vorangegangenen Behandlungen mit den Säuren) entstanden.

Als letzter Schritt wird nun das aus amorphem Aluminium-Oxid bestehende Formteil 1 in einen Brennofen eingesetzt und dort solange Temperaturen von wenigstens 600 Grad Celsius ausgesetzt, bis das (amorphe) Aluminium-Oxid (Al₂O₃) des Formteiles 1 sich in eine kristalline Modifikation umgewandelt hat. Durch das Brennen ist dann der harte und spröde, chemisch beständige und hoch isolierende Stoff Korund mit einem spezifischen Gewicht von etwa 3,9 entstanden. Bis auf das durch das Brennen unvermeidliche Schwinden ist das nunmehr aus Korund bestehende Formteil 1 mit demjenigen aus Reinaluminium gebildeten identisch.

Zusammenstellung der benutzten Bezugsziffern

1 Formteil
2 Einspannrand
3 Trichter
4 Schwingspulenhalter
5 Form
6 Niederhalter
7 Stempel
8 Wanne
9 Gefäß
10 Becken
11 Trog
12 Reinaluminium-Platte
13 Leitungen
14 Ampèremeter
15 Gleichstromquelle

16 Brennofen

**Ansprüche**

1. Verfahren zur Herstellung dünnwandiger Formteile aus Keramik, **dadurch gekennzeichnet,** daß zunächst das Formteil aus Reinaluminium gebildet wird, daß das aus Reinaluminium gebildete Formteil solange einer anodischen Oxidation unterworfen wird, bis aus dem Reinaluminium Aluminium-Oxid geworden ist, und daß zuletzt das aus Aluminium-Oxid bestehende Formteil bei Temperaturen über 600 Grad Celsius so lange gebrannt wird, bis dieses Aluminium-Oxid sich in eine kristalline Modifikation umgewandelt hat.

2. Verfahren nach Anspruch 1, **dadurch gekennzeichnet,** daß das aus Reinaluminium gebildete Formteil vor der anodischen Oxidation zuerst entfettet und abgespült, sodann in Natronlauge gereinigt und angeätzt wird und daraufhin mit verdünnter Salpetersäure die anhaftenden Reste der Natronlauge neutralisiert werden.

3. Verfahren nach den Ansprüchen 1 und 2, **dadurch gekennzeichnet,** daß als Lösung für die anodische Oxidation eine schwache Säure benutzt wird.

4. Verfahren nach den Ansprüchen 1 bis 3, **dadurch gekennzeichnet,** daß die Lösung während der anodischen Oxidation gekühlt wird.

5. Verfahren nach einem der Ansprüche 1 bis 4, **dadurch gekennzeichnet,** daß die anodische Oxidation bei Gleichstrom mit einer Stromstärke von etwa 1 Ampère pro Quadratdezimeter der Oberfläche des Formteiles erfolgt.

6. Verfahren nach einem der Ansprüche 1 bis 5, **dadurch gekennzeichnet,** daß die anodische Oxidation des aus Reinaluminium gebildeten Formteiles so lange erfolgt, bis die Stromstärke auf etwa 10 Milliampère pro Quadratdezimeter der Oberfläche abgefallen ist.

7. Verfahren nach einem der Ansprüche 1 bis 6, **dadurch gekennzeichnet,** daß das Formteil nahtlos aus Reinaluminium gebildet ist.

8. Verfahren nach einem der Ansprüche 1 bis 6, **dadurch gekennzeichnet,** daß das Formteil aus Reinaluminium-Blech durch Pressen gebildet ist.

9. Verfahren nach einem der Ansprüche 1 bis 6, **dadurch gekennzeichnet,** daß das Formteil aus dünnem Reinaluminium-Blech durch Tiefziehen gebildet ist.

10. Verfahren nach Anspruch 8 oder 9, **dadurch gekennzeichnet,** daß das Reinaluminium-Blech eine Dicke zwischen 0,01 und 0,3 Millimeter aufweist.

11. Membran für Schallwandler aus einem wenig dehn-und stauchbaren Material, erhalten durch ein Verfahren nach einem der Patentansprüche 1 bis 10.

12. Membran für Schallwandler aus einem wenig dehn-und stauchbaren Material, bestehend aus Aluminium-Oxid in einer kristallinen Form, nämlich aus Korund.

Fig. 1

Fig. 2

Fig. 3    CCl₄

Fig. 4    NaOH

Fig. 5    NO₃H

Fig. 6    H₂SO₄    0,01....1 Amp / dm²    Al

Fig. 7    > 600°C